# EUROPEAN PATENT SPECIFICATION

(11) **EP 0 403 094 B1**
(45) Date of publication and mention of the grant of the patent: **07.09.1994**
(21) Application number: 90305662.0
(22) Date of filing: 24.05.1990
(51) Int. Cl.: G01M 11/00

(54) **Method of measuring backscattered light, and device for same measuring**
Optisches Rückstreumessgerät und optische Rückstreuvorrichtung
Procédé et appareil de mesure par réflectométrie optique

(30) Priority: 12.06.1989 JP 146897/89
(43) Date of publication of application: 19.12.1990
(73) Proprietor: KOKUSAI DENSHIN DENWA CO., LTD, Shinjuku-ku Tokyo 163 (JP)
(72) Inventor: Wakabayashi, Hiroharu, Kawasaki-shi, Kanagawa-ken (JP); Horiuchi, Yukio, Hiratsuka-shi Kanagawa-ken (JP); Ryu, Shiro, Yokohama-shi, Kanagawa-Ken (JP); Mochizuki, Kiyofumi, Hachioji-shi, Tokyo (JP)
(74) Representative: Carter, Gerald

(56) References cited:
- EP-A- 0 238 134
- DE-A- 3 008 187
- GB-A- 2 179 733
- IEEE PHOTONICS TECHNOLOGY LETTERS, vol. 2, no. 4, April 1990, New York, US, pages 291-293; YUKIO HORIUCHI et al: "Novel coherent heterodyne optical time domain reflectometry for fault localization of optical amplifier submarine cable systems"
- PROC. OF SPIE, vol. 566, August 20-23, 1985, San Diego, US, Fiber Optic and Laser Sensors III, p. 265-275, S.A. Kingsley et al: "OFDR diagnostics for fiber/integrated optic systems and high resolution distributed fiber optic sensing"

## Description

The present invention relates to a method and device of measuring backscattered light generated in an optical fiber by entering a measuring light signal into the fiber, and also relates to a device for the measuring.

When backscattered light generated due to Rayleigh scattering in an optical fiber at the time of entering of a light signal such as a light pulse into the optical fiber at the entering end thereof and coming rearward to the entering end is observed, it turns out that the intensity of the backscattered light is proportional to that of the light signal transmitted at the point of the occurrence of the Rayleigh scattering. For that reason, the distribution of the intensity of the transmitted light signal in the optical fiber in the longitudinal direction thereof or the distribution of the optical transmission loss of the signal in the fiber in the longitudinal direction thereof can be determined by measuring the intensity of the backscattered light with the lapse of the time. A conventional method of measuring the intensity of the backscattered light is the most effective way to determine the distribution of the optical transmission loss in the fiber, and is an indispensable art of searching for the point of a trouble in the fiber. However, since the intensity of the backscattered light coming rearward to the entering end of the optical fiber is very low, heightening the intensity of the light signal to be entered into the fiber, reducing the energy loss in an optical system quick averaging and so forth need to be done in order to improve the ratio of the backscattered light to noise in the measurement.

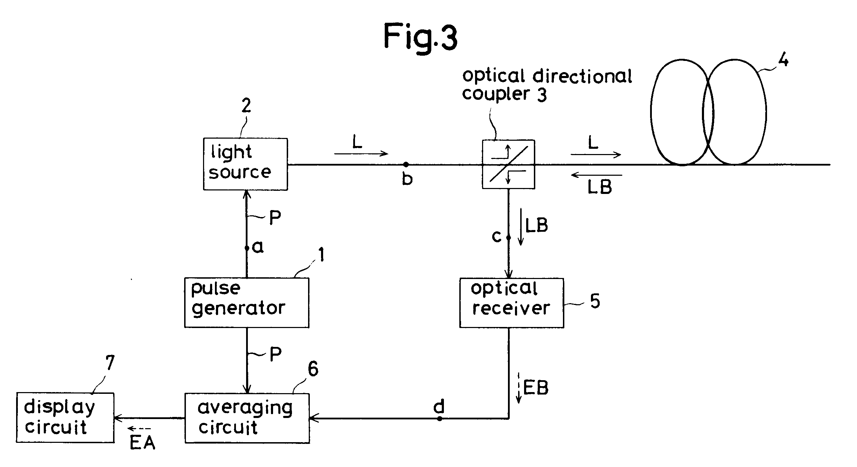

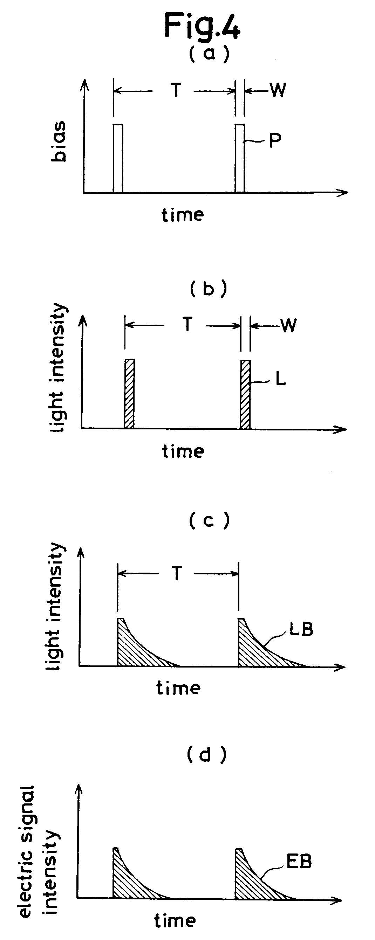

FIG. 3 is a block diagram of the conventional method of measuring the intensity of the backscattered light by using a light pulse. FIGS. 4(a), 4(b), 4(c) and 4(d) are graphs showing the wave forms of signals at points a, b, c and d shown in FIG. 3 FIG. 3 shows a pulse generator 1, a light source 2 such as a semiconductor laser diode, an optical directional coupler 3, the optical fiber under test 4, a optical receiver 5, an averaging circuit 6, and a display circuit 7. The pulse generator 1 produces a single pulse signal P whose repetition period T is conditioned as T > 2 ℓ/v wherein ℓ and v denote the length of the optical fiber 4 and the speed of the transmission of the entered light signal L in the fiber, respectively. The repetition p eriod T is longer than two times of the time which it takes for the light signal L to be transmitted through the optical fiber 4. The pulse time width W of the single pulse signal P is shown in FIG. 4(a) and conditioned as W=2/v wherein d denotes a prescribed measurement distance resolution. The light source 2 emits the light signal L of optional wavelength. The optical directional coupler 3 functions so that the light signal L emitted from the light source 2 and modulated in intensity as shown in FIG. 4(b) is entered into the optical fiber 4 and the backscattered light LB generated in the fiber and shown in FIG. 4(c) is taken out therefrom to a side different from that for the light source 2. The optical receiver 5 receives the backscattered light LB from the coupler 3 and converts the light into an electric signal EB shown in FIG. 4(d). The averaging circuit 6 includes a high-speed A/D converter and a memory. The display circuit 7 is for showing a signal EA generated as a result of the averaging performed by the circuit 6.

When the light signal L modulated in intensity by the single pulse signal P is entered into the optical fiber 4 through the optical directional coupler 3, the light undergoes the Rayleigh scattering while being transmitted in the fiber, so that the backscattered light LB is generated. The backscattered light LB coming rearward to the entering end of the optical fiber 4 is taken out therefrom by the coupler 3 and then converted into electric signal EB by the optical receiver 5. The electric signal EB generated by the optical receiver 5 and corresponding to the intensity of the backscattered light LB is quantized by the high-speed A/D converter of the averaging circuit 6. A quantized signal sent out from the A/D converter is subjected to synchronous addition in the time region of the memory as the pulse signal P from the pulse generator is used as a trigger, so that the averaging is performed on the quantized signal. The intensities of averaged signals EA thus stored in the time region of the memory are sequentially shown by the display circuit 7 in such a manner that an x-axis indicates the length of the optical fiber 4. The distribution of the optical transmission loss in the optical fiber 4 in the longitudinal direction thereof can thus be indicated by the intensities shown by the display circuit 7.

When the conventional method is practiced for an optical communication system or an optical two-way communication system, which employs an optical amplifier such as a semiconductor laser amplifier, an optical fiber Raman amplifier and an optical fiber laser amplifier, not only the backscattered light LB generated by entering the measuring light signal into the optical fiber 4 is received by the optical receiver 5 but also communication light or noise light from the amplifier is received as background noise light by the receiver so that the ratio of the backscattered light to the other light as background noise light is very much lowered or the measurement of the backscattered light is made impossible. The measurement of the intensity of the backscattered light LB is so different, due to other backscattered light generated from the communication signal light in the optical communication system, the optical two-way communication system, a norepeater optical communication system or the like, that the distribution of the optical transmission loss in the optical fiber of the system cannot be monitored during the service thereof. Although it is conceivable that a optical narrow band-pass-filter for taking out only the backscattered light LB to be measured is provided in the optical system so as to function as a means for eliminating the influence of the background noise light on the measurement, there is a problem that the insertion loss in the system is increased due to the presence of the optical filter to lower the ratio of the backscattered light to the noise light. A method in which the background noise light is reduced by the optical heterodyne detection of the beat signal of the measuring light signal L and local oscillation light signal which is for the detection has been already proposed.

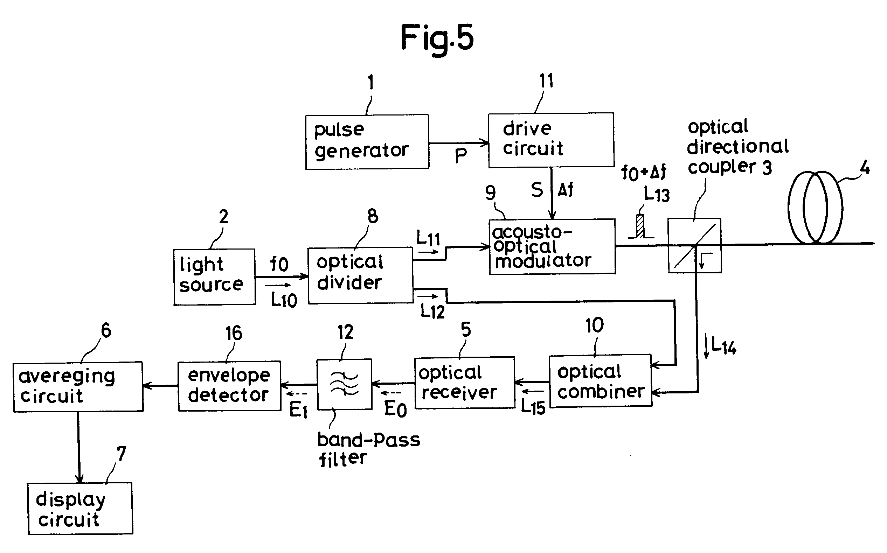

FIG. 5 is a block diagram of another conventional method of measuring the backscattered light through such optical heterodyne detection. In the method, a light singal L10 of optical frequency f0 is emitted from a light source 2 and separated by an optical divider 8 so that a separated light signal L11 is sent to an acousto-optical modulator 9 for frequency modulation and another separated light signal L12 is sent to an optical combiner 10 for a local oscillation light signal. The light signal L11 applied as a measuring light signal to the acousto-optical modulator 9 is subjected to the frequency modulation by the acoustic optical effect of the unit, which is based on an electric sine-wave signal S of frequency Δf, which is generated by a drive circuit 11. As a result, the light signal L11 is converted into a light signal of frequency f0 + Δf. The frequency modulation based on the electric sine-wave signal S is restricted by a pulse signal P produced by a pulse genrator 1 to obtain a single pulse light signal L13 of frequency f0 + Δf as a light signal for measuring the backscattered light L14. The single pulse light signal L13 is entered into the optical fiber 4 at the entering end thereof through an optical directional coupler 3. The bakcscattered light L14 of frequency f0 + Δf, which comes rearward to the entering end of the optical fiber 4 as a result of the entering of the light signal L13 into the fiber, is combined with the separated light signal L12 in the light combiner 10. A combined light signal L15 thus generated by the combiner 10 is subjected to the optical heterodyne detection in a optical receiver 5 so that a beat signal E0 of frequency Δf is generated. The beat signal E0 is processed through a band-pass filter 12 so that the beat signal is removed of background noise light unnecessary for the measurement. The beat signal E0 is then subjected to detection by an envelope detector 16. The output from the detector 16 is subjected to averaging by an averaging circuit 6. The output from the averaging circuit 6 is indiacted. However, since the acousto-optical modulator 9 is provided to perform the frequency modulation for the optical heterodyne detection, the insertion loss is increased to about 10 dB. For that reason, the intensity of the measuring light signal L13 is lowered so that the intensity of the backscattered light L14 generated in the optical fiber 4 is also lowered. This is a problem. Besides, the acousto-optical modulator 9 is very expensive. Therefore, the cost of the equipment for the measurement is high. This is another problem. If the conventional method is applied to an optical communication system including an optical repeater which performs optical amplification, there is a problem that it is not easy to perform the automatic power control of the repeater, because the measuring light signal L13 has a pulse wave from.

The present invention was made in order to solve the abovementioned problems.

Accordingly, it is an object of the present invention to provide a method and device for less expensively measuring backscattered light without lowering the intensity of a measuring light signal.

According to the invention there is provided a method of measuring backscattered light, in which a measuring light signal from a light source is entered into an optical fibre at the entering end thereof so that said backscattered light is generated in said fibre; and said backscattered light is taken out from said fibre at said entering end and then measured, characterised in that
said measuring light signal oscillating continuously and subjected to frequency modulation at a predetermined period is entered into said fibre at said entering end, said measuring light signal consists of a first light signal and a second light signal having predetermined optical frequencies and the first light signal is a modulated signal and the second light signal is a non-modulated signal;
said backscattered light generated in said fibre and said light signal subjected to said modulation are subjected to optical heterodyne detection; and
a beat signal obtained through said detection is processed through a filter and then measured, wherein said filter has an appropriate pass band whose central frequency is an electric intermediate frequency equal to a beat frequency and the optical frequency difference.

The invention further provides a device for measuring backscattered light, in which a measuring light signal from a light source is entered into an optical fibre at the entering end thereof so that said backscattered light is generated in said fibre; and said backscattered light is taken out from said fibre at said entering end and then measured, characterised by:
pulse generation means for producing a pulse at predetermined period;
frequency modulation means for performing frequency modulation on said measuring light signal from said light source in accordance with said period of said pulse to get a modulated measuring light signal which consists of a first light signal and a second light signal having predetermined optical frequencies wherein the first light signal is a modulated signal and the second light signal is a non-modulated signal;
optical combination means for combining said backscattered light which is generated from said modulated measuring light signal at said fibre with said modulated measuring light signal;
optical heterodyne detection means for performing optical heterodyne detection on light generated as a result of said combination;
a filter for obtaining a beat signal through the optical heterodyne detection, wherein said filter has an appropriate pass band whose central frequency is an electric intermediate frequency equal to a frequency of said beat signal and the optical frequency difference; and
envelope detection means for taking out the envelope of said beat signal sent out from said filter.

If the repetition period T of the frequency modulation is conditioned as T > 21/v wherein 1 and v denote the length of the optical fiber and the speed of the transmission of the measuring light signal in the fibre, respectively, a frequency component whose frequency is f0-f1 wherein f0 and f1 denote the frequency of the measuring light signal not subjected to the frequency modulation, and that of the measuring light signal subjected to the frequency modulation, respectively, can be simply taken out from the former beat signal generated from both the measuring light signal not subjected to the frequency modulation and the measuring light signal subjected thereto.

If the frequency of the latter beat signal is set at f0-f1, the signal can simply be removed of noise light by a filter whose central frequency is f0-f1.

If the frequency modulation means is for directly modulating the oscillation frequency of the light source, the frequency modulation can be simply performed.

If the frequency modulation means is for modulating the oscillation frequency of the light source through the use of an external modulator, the accuracy of the frequency in the frequency modulation can be made high.

Since the backscattered light generated in the optical fiber for a coherent light communication system can thus be measured even if the fiber is in service, a very high effect can be produced by the present invention.

The invention will now be more particularly described, by way of example, with reference to the accompanying drawings, in which:
FIG. 1 is a block diagram of each of a method and a device which are provided in accordance with the present invention so as to measure backscattered light;
FIGS. 2(a), 2(b), 2(c) and 2(d) are graphs showing the wave forms of signals at points a, b, c and d shown in FIG. 1;
FIG. 3 is a block diagram of each of a conventional method and a conventional device, which is of or for measuring backscattered light;
FIGS. 4(a), 4(b), 4(c) and 4(d) are graphs showing the wave forms of signals at points a, b, c and d shown in FIG. 3; and
FIG. 5 is a block diagram of each of another conventional method and another conventional device, which is of or for measuring backscattered light.

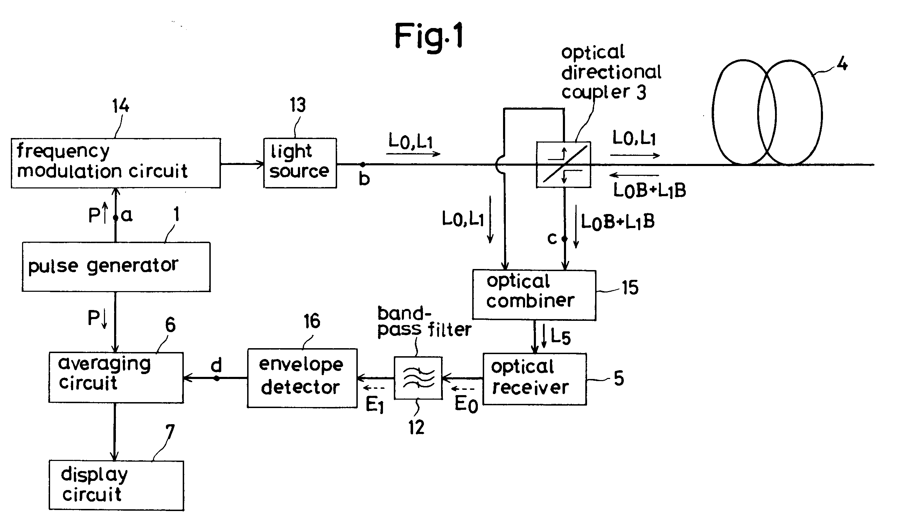

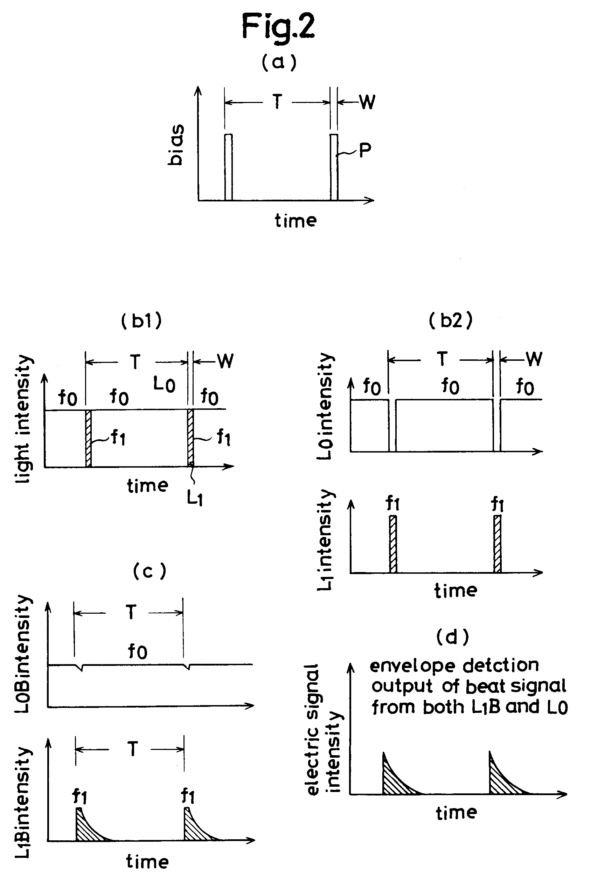

Embodiments of the present invention are hereafter described in detail with reference to FIGS. 1 and 2. One of the embodiments is a method of measuring backscattered light. The other of the embodiments is a device for measuring the backscattered light. Units equivalent to those described for the above-mentioned conventional methods are denoted by the same reference symbols as the latter and not described in detail, hereinafter.

FIG. 1 shows a band-pass filter 12, a light source 13 such as a DFB laser unit, a frequency modulation circuit 14, an optical combiner 15, and an envelope detector 16. The light source 13 has a narrow spectrum width. The frequency modulation circuit 14 is for performing such frequency modulation as to make a predetermined optical frequency difference in the light source 13. The optical combiner 15 functions so that measuring light signals L0 and L1 emitted from the light source 13 are combined with backscattered light rays L0B and L1B generated in an optical fiber 4. The band-pass filter 12 processes a beat signal E0 obtained through optical heterodyne detection by a optical receiver 5, and has an appropriate pass band whose central frequency is an electric intermediate frequency equal to a beat frequency and the predetermined optical frequency difference f0-f1 made by the frequency modulation circuit 14. The envelope detector 16 performs envelope detection on a beat signal E1 obtained through the band-pass filter 12. A pulse signal P acts in the frequency modulation circuit 14 so that the output light signals L0 and L1 from the light source 13 have optical frequencies f0 and f1 as shown in FIGS. 2(b1) and 2(b2). The frequency modulation circuit 14 directly performs the frequency modulation on the light source 13, or performs the modulation through the use of an external modulator based on an electrochemical effect or the like, so that the light signals L0 and L1 oscillate with the predetermined optical frequency difference f0-f1. The output light signal L0 emitted from the light source 13 when the frequency modulation is not performed on the light source has the optical frequency f0. The other output light signal L1 emitted from the light source 13 when the frequency modulation is performed on the light source through the use of the pulse signal P has the other optical frequency f1. The light signals L0 and L1 different from each other in optical frequency because of the frequency modulation and generated at different time points are hereinafter referred to as the reference light signal L0 and the frequency shifted light signal L1, respectively.

The frequency modulation is performed through the use of the pulse signal P having a repetition period T and a pulse time width W and shown in FIG. 2(a), as well as the pulse signal P in the conventional method described above with reference to FIG. 3. For that reason, the modulation light signal L1 is emitted from the light source 13 for a modulation period W. The non-modulation light signal L0 is emitted from the light source 13 for a reference period T-W. The emission of the reference light signal L0 from the light source 13 is kept while the frequency shifted light signal L1 serving as a measuring light signal for generating the backscattered light to be measured is being transmitted in the optical fiber 4 for a period of 2ℓ/v wherein ℓ and v denote the length of the fiber and the speed of the transmission, respectively. Each of the reference signal L0 and the furquency shifted signal L1 is divided by an optically directive coupler 3 so that a divided portion of each of the signals is entered as a measuring light signal into the optical fiber 4 and the other divided portion of each of the signals is entered, as a local oscillation light signal for the optical heterodyne detection, into the optical combiner 15. The refrence light signal L0 and the frequency shifted light signal L1 entered into the fiber 4 act to generate the backscattered light rays L0B and L1B in the fiber, respectively. The backscattered light rays L0B and L1B are taken out from the optical fiber 4 by the optically directive coupler 3, applied to the optical combiner 15, and combined with the reference light signal L0 entered as the local oscillation light signal into the combiner. A combined light signal L5 obtained from the combiner 15 as a result of the combination is subjected to the optical heterodyne detection based on the square-law detection characteristic of the light receiver 5, so that the beat signal E0 corresponding to the frequency difference f0-f1 is obtained.

Since the output light from the light source 13 is continuous light, the frequency shifted light signal L1 is a local oscillation light signal and the reference light signal L0 is a measuring light signal in a case. In that case, however, an averaging circuit 6 does not perform averaging, synchronously with the wave form of the pulse signal P from a pulse generator 1, so that the averaging circuit sends out no output signal to a display circuit 7. As a result, a frequency component f0-f1 of the beat signal E0 generated from both the backscattered light rays L1B based on the frequency shifted light signal L1 and the reference light signal L0 serving as the local oscillation light signal is extracted as the beat signal E1 by the band-pass filter 12, and then subjected to the envelope detection by the envelope detector 16 as shown in FIG. 2(d). The change in the intensity of the output signal from the detector 16 with the lapse of the time is observed so that the change is indicated by the display circuit 7. Also in the case that not only the backscattered light rays but also background noise light are applied to the optical combiner 15, only the frequency component f0-f1 of the beat signal E0 is extracted as the desired beat signal E1 by the band-pass filter 12. The noise light can thus be easily separated to measure the backscattered light in a desired manner.

Although light sources different from each other in oscillation wavelength may be used to obtain the beat signal E1, the light sources need to be controlled to always keep the frequency component f0-f1 of the beat signal E0 at a constant frequency despite external conditions such as temperature. Since only one light source 13 is used in the embodiments of the present invention, an automatic frequency control circuit is not required. Since the continuous light subjected to the frequency modulation is used as the measuring light signal in the embodiments, the present invention can be applied for a practical use without affecting automatic power control for the gain control of an optical amplifier.

## Claims

1. A method of measuring backscattered light, in which a measuring light signal from a light source (13) is entered into an optical fibre (4) at the entering end thereof so that said backscattered light is generated in said fibre (4); and said backscattered light is taken out from said fibre (4) at said entering end and then measured, characterised in that
said measuring light signal oscillating continuously and subjected to frequency modulation at a predetermined period is entered into said fibre (4) at said entering end, said measuring light signal consists of a first light signal (L0) and a second light signal (L1) having predetermined optical frequencies (f0, f1) and the first light signal (L0) is a modulated signal and the second light signal (L1) is a non-modulated signal;
said backscattered light generated in said fibre (4) and said light signal subjected to said modulation are subjected to optical heterodyne detection; and
a beat signal obtained through said detection is processed through a filter (12) and then measured, wherein said filter (12) has an appropriate pass band whose central frequency is an electric intermediate frequency equal to a beat frequency and the optical frequency difference (f0, f1).

2. A device for measuring backscattered light, in which a measuring light signal from a light source (13) is entered into an optical fibre (4) at the entering end thereof so that said backscattered light is generated in said fibre (4); and said backscattered light is taken out from said fibre (4) at said entering end and then measured, characterised by:
pulse generation means (1) for producing a pulse at predetermined period (T);
frequency modulation means (14) for performing frequency modulation on said measuring light signal from said light source (13) in accordance with said period (T) of said pulse to get a modulated measuring light signal which consists of a first light signal (L0) and a second light signal (L1) having predetermined optical frequencies (f0, f1) wherein the first light signal (L0) is a modulated signal and the second light signal (L1) is a non-modulated signal;
optical combination means (3, 15) for combining said backscattered light which is generated from said modulated measuring light signal at said fibre (4) with said modulated measuring light signal;
optical heterodyne detection means (5) for performing optical heterodyne detection on light generated as a result of said combination;
a filter (12) for obtaining a beat signal through the optical heterodyne detection, wherein said filter (12) has an appropriate pass band whose central frequency is an electric intermediate frequency equal to a frequency of said beat signal and the optical frequency difference (f0, f1) ; and
envelope detection means (16) for taking out the envelope of said beat signal sent out from said filter (12).

3. A device according to Claim 2, characterised in that the period (T) of the frequency modulation is conditioned as T > 21/v wherein 1 and v denote the length of said fibre (4) and the speed of the transmission of the modulated measuring light signal in said fibre (4), respectively.

4. A device according to Claim 2, characterised in that the frequency modulation means (14) is for directly modulating the frequency of the light source.

5. A device according to Claim 2, characterised in that the frequency modulation means (14) is for modulating the oscillation frequency of the light source through the use of an external modulator.

## Patentansprüche

1. Verfahren zur Messung rückgestreuten Lichtes, bei welchem ein Messlichtsignal von einer Lichtquelle (13) in eine optische Faser (4) an einem Eingangsende derselben injiziert wird, so dass das rückgestreute Licht in der Faser (4) erzeugt wird und das rückgestreute Licht aus der Faser am Eingangsende herausgenommen und dann gemessen wird, dadurch gekennzeichnet, dass das Messlichtsignal, welches kontinuierlich schwingt und der Frequenzmodulation bei einer vorbestimmten Periode ausgesetzt ist, in die Faser (4) am Eingangsende injiziert wird, wobei das Messlichtsignal aus einem ersten Lichtsignal (L0) und einem zweiten Lichtsignal (L1) besteht, welche vorbestimmte optische Frequenzen (f0,f1) haben und das erste Lichtsignal (L0) ein moduliertes Signal und das zweite Lichtsignal (L1) ein nicht moduliertes Signal ist, das in der Faser (4) erzeugte rückgestreute Licht und das der Modulation ausgesetzte Lichtsignal einer optischen Heterodyndemodulation unterworfen wird, und das durch diese Demodulation erhaltene Schwebungssignal von einem Filter (12) verarbeitet und dann gemessen wird, wobei der Filter (12) ein geeignetes Durchlassband hat, dessen Mittenfrequenz eine elektrische Zwischenfrequenz ist gleich einer Schwebungsfrequenz und der optischen Frequenzdifferenz (f0, f1).

2. Vorrichtung zur Messung rückgestreuten Lichtes, bei welcher ein Messlichtsignal einer Lichtquelle (13) in eine optische Faser an deren Eingangsende injiziert wird, so dass rückgestreutes Licht in der Faser (4) erzeugt wird, und das rückgestreute Licht am Eingangsende aus der Faser (4) herausgenommen und dann gemessen wird, gekennzeichnet durch eine Impulserzeugungseinrichtung (1) zum Erzeugen eines Impulses bei einer vorbestimmten Periode (1), eine Frequenzmodulationseinrichtung (14) zur Durchführung der Frequenzmodulation an dem Messlichtsignal von der Lichtquelle (13) in Uebereinstimmung mit der Periode (T) des Impulses, um ein moduliertes Messlichtsignal zu erhalten, welches aus einem ersten Lichtsignal (L0) und einem zweiten Lichtsignal (L1) mit vorbestimmten optischen Frequenzen (f0,f1) besteht, wobei das erste Lichtsignal (L0) ein moduliertes Signal und das zweite Lichtsignal (L1) ein nicht moduliertes Signal ist, eine optische Kombinationseinrichtung (3,15) zum Kombinieren des rückgestreuten Lichtes, welches vom modulierten Messlichtsignal in der Faser (4) erzeugt wird, mit dem modulierten Messlichtsignal, eine optische Heterodyndemodulationseinrichtung (5) zur Durchführung der optischen Heterodyndemodulation an Licht, welches als Resultat der Kombination erzeugt wird, ein Filter (12) zur Erhaltung eines Schwebungssignals durch die optische Heterodyndemodulation, wobei der Filter (12) ein geeignetes Durchlassband hat, dessen Mittenfrequenz eine elektrische Zwischenfrequenz ist gleich der Frequenz des Schwebungssignals und der Frequenzdifferenz (f0,f1), und einer Hüllkurvengleichrichtungseinrichtung (16) zum Herausnehmen der Hüllkurve des Schwebungssignals, welches vom Filter ausgeht.

3. Vorrichtung nach Anspruch 2, dadurch gekennzeichnet, dass die Periode (T) der Frequenzmodulation konditioniert ist als T > 21/v, wobei 1 und v die Länge der Faser (4) und die Geschwindigkeit der Uebertragung des modulierten Lichtsignales in der Faser (4) darstellen.

4. Vorrichtung nach Anspruch 2, dadurch gekennzeichnet, dass die Frequenzmodulationseinrichtung (14) die direkte Modulation der Frequenz der Lichtquelle bewirkt.

5. Vorrichtung nach Anspruch 2, dadurch gekennzeichnet, dass die Frequenzmodulationseinrichtung (14) die Modulation der Schwingfrequenz der Lichtquelle unter Verwendung eines externen Modulators bewirkt.

## Revendications

1. Méthode pour mesurer de la lumière réfléchie dans laquelle un signal lumineux de mesure d'une source de lumière (13) est injecté dans une fibre optique (4) à son extrémité d'entrée, de sorte que la lumière réfléchie est produite dans ladite fibre (4), et la lumière réfléchie est sortie de ladite fibre (4) à ladite extrémité d'entrée et ensuite mesurée, caractérisée en ce que ledit signal lumineux de mesure, oscillant de façon continue et soumis à la modulation de fréquence à une période prédéterminée, est injecté dans ladite fibre (4) à ladite extrémité d'entrée, ledit signal lumineux de mesure consistant en un premier signal lumineux (L0) et un second signal lumineux (L1) ayant des fréquences optiques prédéterminées (f0,f1) et le premier signal lumineux (L0) étant un signal modulé et le second signal lumnineux (L1) étant un signal non modulé, la lumière réfléchie produite dans ladite fibre et ledit signal lumineux soumis à ladite modulation sont soumis à la détection hétérodyne optique, et un signal de battement obtenu par ladite détection est traité par un filtre (12) et ensuite mesuré, ledit filtre (12) ayant une bande passante appropriée, dont la fréquence centrale est une fréquence intermédiaire électrique égale à la fréquence de battement et la différence de fréquence optique (f0,f1).

2. Dispositif pour mesurer la lumière réfléchie dans lequel un signal lumineux de mesure d'une source de lumière (13) est injecté dans une fibre optique (4) à son extrémité d'entrée de sorte que de la lumière réfléchie est produite dans ladite fibre, et la lumière réfléchie est sortie de la fibre (4) à son extrémité d'entrée et ensuite mesurée, caractérisé par un moyen de génération d'impulsions (1) pour fournir une impulsion à une période prédéterminée (T), un moyen de modulation de fréquence (4) pour réaliser la modulation de fréquence sur ledit signal lumineux de ladite source de lumière en accord avec ladite période de ladite impulsion pour obtenir un signal lumineux de mesure modulé qui consiste en un premier signal lumineux (L0) et un second signal lumineux (L1) ayant des fréquences optiques prédéterminées (f0,f1), le premier signal lumineux (L0) étant un signal modulé et le second signal lumineux (L1) étant un signal non modulé, un moyen de combinaison optique (3,15) pour combiner la lumière réfléchie qui est produite à partir dudit signal lumineux de mesure modulé à ladite fibre (4) avec le signal lumineux de mesure modulé, un moyen de détection hétérodyne optique (5) pour réaliser la détection hétérodyne optique sur la lumière produite comme résultat de ladite combinaison, un filtre (12) pour obtenir un signal de battement par ladite détection hétérodyne optique, ledit filtre (12) ayant une bande passante, dont la fréquence centrale est une fréquence électrique intermédiaire égale à la fréquence dudit signal de battement et la différence de fréquences optiques (f0,f1), et un moyen de détection de phase redresseur d'enveloppante (16) pour sortir l'enveloppe dudit signal de battement envoyé par ledit filtre (12).

3. Dispositif selon la revendication 2, caractérisé en ce que la période de la modulation de fréquence est conditionnée comme T > 21/v, où 1 et v désignent la longueur de ladite fibre (4) et la vitesse de transmission du signal de mesure modulée dans ladite fibre (4), respectivement.

4. Dispositif selon la revendication 2, caractérisé en ce que ledit moyen de modulation de fréquence (14) réalise la modulation directe de la fréquence de la source de lumière.

5. Dispositif selon la revendication 2, caractérisé en ce que ledit moyen de modulation de fréquence (14) réalise la modulation de la fréquence d'oscillation de la source de lumière par utilisation d'un modulateur extérieur.
